# EUROPEAN PATENT APPLICATION

(11) **EP 1 881 032 A1**
(43) Date of publication of application: **23.01.2008**
(21) Application number: 07013540.5
(22) Date of filing: 11.07.2007
(51) Int. Cl.: C08L 61/24, C09J 161/24, C08J 5/24, C08L 61/32, C09J 161/32

(54) **Modified urea-formaldehyde resin composition, methods of making and articles made therefrom**

(30) Priority: 17.07.2006 US 487622
(71) Applicant: Hexion Specialty Chemicals Research Belgium S.A., 1348 Ottignies Louvain-la-Neuve (BE)
(72) Inventor: Grooms, Nathalie S., Louisville, KY 40207 (US); Snover, David A., Floyds Knobs, IN 47119 (US)
(74) Representative: van der Straaten, Jan Anthony

(57) **Abstract**

A binder composition, useful in the manufacture of construction industry products, and particularly useful in the manufacture of fiber mats, for use in roofing products, is disclosed. The binder composition includes a urea-formaldehyde ("UF") resin modified with both a latex emulsion polymer and a solution polymer, provided however, the UF resin is not modified with an water soluble non-ionic amine oxide. The binder composition is prepared at a low material cost, may be supplied in a one-piece package, exhibits good shelf-life and has low foaming tendencies. Methods of preparing the binder composition, and glass fiber mats bonded with the binder composition, having desirable wet and dry tensile properties, tear strength, cure speed and mat caliper, are also disclosed.

## Description

### FIELD OF THE INVENTION

The invention relates to urea-formaldehyde ("UF") binder compositions, useful in the manufacture of construction industry products, and particularly useful in the manufacture of fiber mats for use in roofing products. The binder compositions include a UF resin modified with both a latex emulsion polymer and a solution polymer, provided however, the UF resin is not modified with an water soluble non-ionic amine oxide. The binder compositions are prepared at a low material cost, may be supplied in a one-piece package, exhibit good shelf-life and have low foaming tendencies. The invention also relates to methods of preparing the binder compositions, and to fiber mats, particularly glass fiber mats, bonded therewith.

### BACKGROUND OF THE INVENTION

Urea-formaldehyde ("UF") resins are utilized as binder compositions for fibrous materials, such as glass fibers, to form mats. The glass fiber mats are useful in the manufacture of a variety of construction industry products, and are especially useful in the manufacture of roofing products such as asphalt shingles.

Glass fiber mats may be manufactured commercially by a "wet-laid process," descriptions of which may be found, for example in U.S. Patent Nos. 2,906,660, 3,012,929, 3,050,427, 3,103,461, 3,228,825, 3,760,458, 3,766,003, 3,838,995 and 3,905,067. In general, the wet-laid process includes first forming an aqueous slurry of short-length glass fibers, under agitation in a mixing tank, then feeding the slurry onto a moving screen where the fibers enmesh themselves into a wet glass fiber mat. Excess water is separated from the wet fiber mat. After which, the binder composition is applied, typically by soaking the mat or impregnating the mat surface. The binder composition is then thermally cured, typically at about 200 to 250°C.

UF resins are advantageous for use as binder compositions in glass mat manufacture because of low cost, quick cure, and high strength per weight response. Unmodified UF resins, however, pose problems relating to brittleness, low tear strength and minimum flexibility. To increase strength, toughness and flexibility, the UF resins are commonly modified with either a latex (emulsion) polymer or other acrylic, acrylate, vinyl or styrene polymers or copolymers and the like.

Current practice includes modifying UF resins with latex either at time of UF manufacture or at the time of mat manufacture. Latex modifiers can enhance mat properties such as wet and dry tensile strengths, when compared to non-latex modified UF resins. However, the use of latex modifiers increases process time and product cost.

Another current practice includes using high molecular weight solution polymers as UF modifiers at concentrations of 0.5 to 5%. However, the use of these modifiers increases the viscosity of the binder mix, making handling and glass mat manufacture more difficult because of increased demand on vacuum and pump systems. In addition, the increased viscosity does not provide for adequate LOI (loss on ignition) percentage, and makes drainage control difficult.

Latex modifiers can be added during UF resin manufacture. It is known, however, that latexes and UF resins may interact in regard to their chemical reactivity and physical compatibility. Superior mixing capability is needed to properly mix the latex into the UF resin without excessive foaming, or separation or destabilization of the latex emulsion. It is also known that the acidic nature of latexes is likely to affect the pH and reactivity, and thus the cure speed and performance, of the UF resin. In addition, common neutralizers of latex acids can react with UF resin to consume free formaldehyde, lower pH, and/or decrease final product shelf life.

Shelf life of UF binders as it pertains to the manufacture of wet laid nonwoven fiber mats is determined by measuring both the neat binder integrity and its water dilution stability. Neat resin integrity is depicted as supplied binder characteristics such as viscosity and uniformity. Water dilution stability is depicted as the amount of precipitation that occurs in water over time. Precipitation of binder will cause fall-out during mat processing, creating need for maintenance downtime and the addition of unnecessary costs to the process. As UF binder ages, the viscosity will increase, separations can occur, and water dilution properties will diminish, eventually making the binder unfit for use as a wet-laid nonwoven binder. Standard non-latex modified UF resin binder typically has a shelf life (neat resin integrity and dilution stability) up to about 30 days.

Latexes can maintain their "neat" shelf life for up to and often in excess of 6 months, but their water dilution properties are more sensitive. When latexes are diluted, their particles move further from one another, destabilizing the surfactant and ionic protection in water. This affect is exaggerated when mixed in UF resin because of the additional polymer and chemical interactions. Latex will significantly decrease the shelf life of a UF resin down to as few as 2 days. Herein lies the need to properly formulate the compatibility of UF resin and latex modifier as well as engineer adequate manufacturing conditions to ensure proper blending, pH control and final binder integrity.

Latexes, water soluble polymers and other common UF modifiers will often increase the foaming tendency of the binder, in both binder manufacture and in mat processing. Foam is problematic for various reasons and should be kept to a minimum. Defoamers are well known in the art and used to control foaming. However, defoamer amounts need to be kept to a minimum due to their tendency to cause fish eye, orange peel or other anomalies during the binder application, decreasing the binders overall coating and strength properties.

U.S. Pat. Nos. 4,258,098; 4,560,612 and 4,917,764 disclose the use of styrene-butadiene latex-modified, UF resin compositions as a binder for glass fiber mats.

U.S. Pat. No. 5,914,365 discloses an aqueous UF fiber mat adhesive binder formulation modified by the addition of a minor amount of a water-soluble, styrene-maleic anhydride (SMA) copolymer.

US Patent No. 5,804,254 discloses a method for flexibilizing a glass fiber nonwoven bound with a cured UF resin binder, where the binder includes a cured UF resin and 0.5-5% by weight, based on the weight of the UF resin, of a water-soluble polymer comprising 40-100% by weight, based on polymer weight, of a polymerized ethylenically unsaturated carboxylic acid monomer, the polymer having a weight average molecular weight from 100,000 to 2,000,000.
U.S. Patent No. 6,384,116 discloses a binder composition comprising a UF resin modified with a water-soluble non-ionic amine oxide and optionally further modified with an anionic acrylic latex and/or a water-soluble polymer comprising 40-100% by weight, based on polymer weight, of a polymerized ethylenically unsaturated carboxylic acid monomer, the polymer having a weight average molecular weight from 100,000 to 2,000,000.

U.S. Patent No. 6,642,299 discloses an aqueous binder composition containing a UF resin modified with an additive comprising (1) styrene acrylic acid or styrene acrylate, (2) an adduct of styrene, maleic anhydride, and an acrylic acid or acrylate or (3) a physical mixture of a styrene acrylic acid or styrene-acrylate copolymer and a styrene-maleic anhydride copolymer. The resulting binder is used in the preparation of fiber mats.

U.S. Patent No. 6,544,911 discloses a coated fiber mat of improved tear strength where the coating comprises a cured, non-woven, fiber glass mat containing a polysiloxane wherein the fibers are fixedly distributed in a formaldehyde type binder containing a binder modifier which is a crosslinked styrene/acrylic polymer, and to a process for the preparation of the mat.

U.S. Patent No. 5,518,586 discloses a UF resin modified with a water-insoluble anionic phosphate ester is used as binder in the preparation of glass fiber mats using a hydroxyethyl cellulose white water system. High tear strength glass fiber mats can be produced in a hydroxyethyl cellulose white water system using such a binder.

U.S. Patent No. 5,851,933 discloses method for making non-woven fibrous mats that possess superior tear strengths in roofing products, and mats produced by the method. The mats comprise glass fiber bonded together with a dried and cured mixture of aqueous UF resin and a self crosslinking copolymer of vinyl acrylic or polyvinyl acetate.

U.S. Patent No. 5,334,648 discloses emulsion copolymers, for use as UF resin modifiers, formed from vinyl chloride monomers, softening monomers, and functional monomers. The copolymer, when blended with UF resins and used as a binder, yields improved wet and dry tensile strength and better tear resistance. These binders are particularly useful as glass mat binders for the production of roofing shingles.

US Patent No. 5,389,716 discloses a binder composition for fibrous mats which includes a stable mixture of an aqueous aldehyde condensation polymer-based resin and a fire retardant latex wherein the weight ratio of the latex to the resin is at least 1:1. The composition optionally includes an amount silica colloid sufficient to enhance the flame resistant property.

In light of the above, there is a need in the art for UF resin binder compositions for glass mat, which provide for improved the wet and dry tensile properties, tear strength, cure speed and mat caliper. There is another a need in the art for UF resin binder compositions, for glass mat, which provide a lower raw material cost, when compared to traditionally modified binders. There is still another need in the art for UF resin binder compositions, for glass mat, which may be supplied in a one-piece package, which would maintain fitness for use up to at least 7 days post-manufacture and which does not require blending by the end user and thereby improving product handling and reducing customer processing time. It is also necessary to provide a one-piece binder that exhibits adequate foam control, without excessive amounts of defoamers, and one that is of desired supplied solids content.

### SUMMARY OF THE INVENTION

In one embodiment, there is provided an aqueous, modified urea-formaldehyde binder composition which includes, a urea-formaldehyde resin modified with a combination of about 0.1 to about 5.0 wt% of a water-soluble polymer and about 0.1 to about 25 wt% a latex emulsion, where the wt% is based upon the weight of the modified urea-formaldehyde resin. Provided however, the UF resin is not modified with a water soluble non-ionic amine oxide.

In another embodiment, there is provided a method of making a modified urea-formaldehyde composition which includes combining a urea-formaldehyde resin with an neutralized polyacrylate polymer, neutralizing the combination a pH of between about 7 and about 8.5, then combining the neutralized combination with a latex emulsion.

In still another embodiment, there is provided a bonded fiber mat bonded with a modified urea-formaldehyde resin modified with a combination of about 0.1 to about 5.0 wt% of a water-soluble polymer and about 0.1 to about 25 wt% a latex emulsion, where the wt% is based upon the weight of the modified urea-formaldehyde resin. Provided however, the UF resin is not modified with a water soluble non-ionic amine oxide. The fibers may be selected from carbon, cellulose, polyester, glass, cotton and combinations and any subset thereof.

### DETAILED DESCRIPTION OF THE INVENTION

The modified urea-formaldehyde ("UF") binder compositions of the invention include a UF resin, modified with a combination of a water-soluble polymer and a latex emulsion. The UF resin, however, is not modified with a water soluble non-ionic amine oxide, as described in US Patent No. 6,384,116, incorporated herein by reference.

### UF Resins

The UF resin utilized in the binder composition of the invention can be prepared from urea and formaldehyde monomers, or from UF pre-condensates, in manners well known to those skilled in the art. The preparation of UF resins is disclosed, for example in U.S. Patent No. 6,642,299, incorporated herein by reference.

UF resins are generally optimized during their manufacture by adding polyalkylenepolyamines such as triethylene tetramine, tetraethylenepentamine as well as ammonium hydroxide to provide charge characteristics, as well as to moderate the subsequent curing rate of the resin. The amount of polyalkylenepolyamines used in the manufacture of the UF resin will generally vary from about 0 to 3% and preferably about 0.002 to about 1% by weight of the UF resin. The amount of aqueous ammonia used in the manufacture of the UF resin will generally vary from about 0% to about 20%, and preferably from about 3 to about 12%, of 26 Baume ammonia based on the weight of the UF resin. One such class of UF resins useful in the binder compositions of the present invention is described in, for example, U.S. Pat. No. 5,362,842, incorporated herein by reference.

The molar ratio of formaldehyde to urea in UF resins utilized in the bonder compositions invention can vary over a wide range such as from about 1.4 to about 3.0, and preferably about 1.4 to about 2.4. A typical modified UF resin, utilized in the binder compositions of the invention, has a non-volatile content of about 60%, a pH of about 8 and a Brookfield viscosity (Brookfield LVF #2/60 rpm, at 25°C) of about 300 cps.

The UF resins, as well as the modified UF resins used in the binder compositions of the invention, will generally have a pH of from about 7 to about 8.5, a Brookfield viscosity of from about 50 to 500 cps, a free formaldehyde content of about 0 to 3%, preferably about 0.1 to 0.5%, a non-volatile content of about 45% to about 65% or 70%, and a water dilutability of about 1:1 to about 100:1, preferably about 10:1 to about 50:1.

UF resins for glass mat application are commercially available, for example, from Georgia Pacific Resins, Inc., Atlanta, Ga., Hexion Specialty Chemicals, Inc. Columbus, Ohio and Dynea USA, Springfield, Oregon. These resins generally are modified with methylol groups which upon curing form methylene or ether linkages. Such methylols may include N,N'-dimethylol; dihydroxymethylolethylene; N,N'-bis(methoxymethyl), N,N'-dimethylolpropylene; 5,5-dimethyl-N,N'-dimethylolpropylene; N,N'-dimethylolethylene; N,N'-dimethylolethylene and the like.

### Water-Soluble polymer

A water-soluble polymer is utilized in conjunction with a latex emulsion in the binder composition of the invention. In one embodiment, the water-soluble polymer contains 40-100% by weight, based on polymer weight, of at least one polymerized ethylenically unsaturated carboxylic acid monomer. The water-soluble polymer is formed by polymerization of ethylenically unsaturated monomers such as, for example, methacrylic acid, acrylic acid, crotonic acid, fumaric acid, maleic acid, 2-methyl maleic acid, itaconic acid, 2-methyl itaconic acid, a,b-methylene glutaric acid, and salts thereof.
Alternatively, ethylenically unsaturated anhydrides, which form carboxylic acids during or subsequent to polymerization, may be utilized, such as, for example, maleic anhydride, itaconic anhydride, acrylic anhydride, and methacrylic anhydride. Additional ethylenically unsaturated monomer(s) may be copolymerized with the carboxylic acid monomer in an amount of 0-60% by weight, based on polymer weight, such as, for example, acrylic ester monomers including methyl acrylate, ethyl acrylate, butyl acrylate, 2-ethylhexyl acrylate, decyl acrylate, methyl methacrylate, butyl methacrylate, isodecyl methacrylate, hydroxyethyl acrylate, hydroxyethyl methacrylate, and hydroxypropylmethacrylate; acrylamide or substituted acrylamides; styrene or substituted styrenes; butadiene; vinyl acetate or other vinyl esters; acrylonitrile or methacrylonitrile; and the like. The optional additional ethylenically unsaturated monomer must be selected so as not to render the polymer insoluble in water. Therefore, lesser amounts of hydrophobic monomers and greater amounts of hydrophilic monomers, may be utilized without compromising water solubility of the polymer. The water-soluble polymer has a weight average molecular weight from about 100,000 to about 2,000,000, as measured by aqueous gel permeation chromatography. Water-soluble polymers useful in the binder compositions of the present invention, as well as their method of preparation, are described in, for example, U.S. Pat. No. 5,804,254, incorporated herein by reference.

In another embodiment, an ammonia neutralized polyacrylate solution polymer marketed by Rohm and Haas Company under the trade name Solution HS 100 is an example of a water-soluble polymer which can be used in this invention. It also finds utility for thickening and stabilizing water based synthetic and natural latexes. Solution HS 100 is a clear to slightly hazy liquid usually shipped at 11 % solids at a pH of 9.3 with a Brookfield viscosity of about 700 cps. The present invention utilizes the water-soluble polymer to improve shelf life of a typical latex emulsion modified one-piece binder system. Other forms of water-soluble polymers can be obtained from HB Fuller, The Dow Chemical Company, and Hexion Specialty Chemicals, Inc.

In another embodiment, the water-soluble polymer utilized in the binder compositions of the invention include a random polymer of about 20 wt% to about 40 wt%, preferably about 30 wt% to about 40 wt% and more preferably about 35 wt% to about 38 wt% of acrylic acid, with about 60 wt % to about 80 wt%, preferably about 60 wt % to about 70 wt% and more preferably about 62 wt% to about 65 wt% acrylamide, and preferably having a molecular weight of approximately 500,000 Daltons.

In another embodiment, the water-soluble polymer utilized in the binder compositions of the invention includes a styrene-maleic anhydride (SMA) copolymer, as described in, for example, U.S. 5,914,365, incorporated herein by reference.

In another embodiment, the water-soluble polymer utilized in the binder compositions of the invention includes a styrene acrylic acid or styrene acrylate, an adduct of styrene maleic anhydride, and an acrylic acid or acrylate, or a physical mixture of a styrene acrylic acid or styrene-acrylate copolymer and a styrene-maleic anhydride copolymer, as described in, for example, U.S. 6,642,299, incorporated herein by reference.

Preferably, the water-soluble polymers utilized in the binder compositions of the invention are neutralized to a pH of about 7 to about 11 and preferably to a pH of about 8 to 11. Conventional alkaline materials can be used for neutralizing the polymers such as ammonia, ammonium carbonate and the like, as well as alkali metal or alkaline earth metal hydroxides and carbonates such as those of sodium, potassium and calcium.

The quantity of the water-soluble polymer used in the binder compositions of this invention is in an amount sufficient to improve the tensile property of a glass fiber mat while not increasing viscosity such that mat processing is hindered. The quantity of water-soluble polymer used in the modified UF resin can vary over a wide range such as that of about 0.1% to about 5% and preferably about 0.2% to about 3%, based on the weight of the modified UF resin. In one embodiment, the water-soluble polymer is an ammonia neutralized polyacrylate solutions with a range of molecular weight, as represented by Brookfield viscosities, of between 400 to 1000 cps at 11% solids.

### Latex Emulsion

A latex emulsion is utilized in conjunction with the water-soluble polymer in the binder composition of the invention. The latex may be selected from any common latex including acrylic, vinyl, styrene butadiene or other acrylate chemistry, most preferred latexes are of styrene or pure acrylate chemistry. Glass transition (T^{g}) temperatures of desired latexes as used in this invention can range from 5°C to 110°C, preferably near 100°C.

In one embodiment, the latex is a anionic acrylic or vinyl acrylic latex. Preferably such latexes have a T_{g} (glass transition temperatures) between about 25°C to about 10°C. Also, it is preferred that such latexes have self-crosslinking capacity. Examples of suitable commercial latexes for use in this invention include those supplied by Rohm & Haas, HB Fuller, Hexion Specialty Chemicals, Inc., Parachem, Omnova Solutions, The Dow Chemical Company and Reichhold or other known latex emulsion suppliers. The acrylic latex can be based on polymers or copolymers produced from monomers comprising ethylenically unsaturated carboxylic acid monomers such as acrylic acid, methacrylic acid and esters of these monomers such as methylacrylate, methylmethacrylate and cross-linkable functional comonomers, for example, but not limited to, methylol-acrylamide. The vinyl acrylic latex is a copolymer of an acrylic monomer, e.g., an acrylate monomer and a vinyl monomer.

In one embodiment, the latex emulsion utilized in the binder composition of the invention includes homopolymers of vinyl chloride or vinylene chloride, or copolymers of vinyl chloride and vinylene chloride, as described in, for example, US 5,334,648 or US 5,851,933, each of which is incorporated herein by reference.

In another embodiment, the latex emulsion utilized in the binder compositions of the invention includes a styrene-butadiene latex copolymer, as described in, for example, U.S. 4,258,098, US 4,560,612 and US 4,917,764, each of which is incorporated herein by reference.

The quantity of latex used in the binder compositions of this invention is in an amount sufficient to improve the tensile property of a glass fiber mat, while decreasing viscosity of water-soluble polymer modified resin such that mat processing and binder coating becomes optimized. The quantity of latex used in the modified UF resin can generally be used at a concentration of about 0.1% to about 25%, preferably about 2% to 20% and particularly about 2% to 7% based on the weight of the modified UF resin. Preferably, the latex is added and thoroughly mixed with the UF resin at any time after the completion of the urea and formaldehyde polymerization reaction and at a pH of about 7 to about 8.5.

### Binder Compositions

In one embodiment of the modified UF binder composition of the invention, the quantity of water-soluble polymer can range from about 0.1 to about 5.0 wt%, preferably from about 0.2 to about 3.0 wt%, and more preferably from about 1.0 to about 2.0 wt%, based upon the weight of the modified UF binder compositions. The quantity of the latex emulsion can range from about 0.1% to about 25.0 wt%, preferably from about 2.0% to about 20.0% and more preferably from about 2.0% to about 7.0%, based upon the weight of the modified UF binder compositions. In a preferred embodiment, the total quantity of the water-soluble polymer and latex emulsion is present in an effective amount, but not more than 25 wt% based upon the weight of the modified UF resin.

In another embodiment, the aqueous modified UF binder composition of the invention has a solids content, as measured by a pan solids method, of about 55% to about 65%, preferably about 58 to about 63% and more preferably about 60 to about 63%. In another embodiment, the viscosity of the aqueous modified UF binder composition of the invention, as measured by Brookfield LVII viscometer utilizing spindles #1 or #2 at 20 rpm at 25°C is about 100 to about 600 cps, preferably about 200 to about 500 cps and more preferably about 100 to about 400 cps.

The addition of the water-soluble polymer as well as the latex is generally made after the manufacture of the UF resin, either before, after or at the same time as the addition of other modifications such as catalyst, antifoam, or neutralizers. In one embodiment, the UF resin is combined with a solution polymer, preferably a polyacrylate solution polymer, to form a first reaction mixture, which is neutralized to a pH of between about 7 and about 8.5, and then combined a latex emulsion.

### Glass Mat

The modified UF resin binder compositions of the invention may be applied to a wide variety of glass fiber mats since the chemical and physical properties resulting from prior treatment of the fibers and mats such as sizing, suspending agents, and the various other processes and compositions used to make the fiber, do not significantly compete with the performance of the binder of current invention. The amount of the binder composition of the invention applied to the glass fiber mat is in an amount sufficient to attain desired tear and tensile properties. The quantity can vary over a wide range such as that of ioadings in the range of about 3 wt% to 45 wt% and preferably about 10 wt% to about 40 wt% based on the dry weight of the bonded mat.

The ratio of latex emulsion combined with water-soluble polymers as detailed in current invention can be adjusted to overcome differences provided by varying glass sizing, diameter, and length. It is understood that certain formulations of binder compositions of the invention, in combination with certain glass fiber mats, will provide more desirable tensile and tear properties.

While described particularly useful in the manufacture of glass fiber mats, it is understood that the binder compositions of the invention may also be usefully utilized to bind other fibers such carbon, cellulose, polyester, cotton and the like.

In order to provide a better understanding of the present invention including representative advantages thereof, the following examples are offered. It is understood that the examples are for illustrative purposes and should not be regarded as limiting the scope of the invention to any specific materials or conditions.

### EXAMPLES

Handsheets were prepared on a Williams Former. Three 30.48 x 30.48 cm (12"x12") mats were made of using various 2.45 cm (1") Owens Coming Advantex 9501 fiberglass, Magnafloc 835A viscosity modifier and Katapol VP532 dispersant. The wet sheet was transferred to a vacuum station, dewatered and saturated with binder. The binder was prepared to 20% solids using tap water and the mix pH was recorded. The binder amount on each handsheet or LOI (loss on ignition) was targeted to 18% using a basis weight of 770 g/9.29 m² (1.701bs/100sqft). Each handsheet was cured in a forced air oven for 3 minutes at 177, 191, 204 and 215°C (350, 375, 400 and 425°F), unless otherwise specified.

LOI represents the percent of UF resin or modified UF resin on the glass fiber mat. A treated mat with a known weight is placed in an oven at a sufficiently high temperature to burn off the binder. After ignition, only glass fiber remains and the weight of the sample is remeasured. The % difference between these weights (the loss due to ignition) provides the % resin or binder in the treated mat.

Handsheets were tested for Elmendorf tear, dry and 10 minutes/82°C (180°F) wet tensile. For each cure condition, 3 handsheets were cut into 10.16 x 3.81 cm (4" x 1.5") strips for wet and dry tensile testing and 7.62 x 6.35 cm (3" x 2.5") strips for Elmendorf tear testing.

Dry tensile was evaluated via Instron Tensile testing: 3.81 cm (1.5") width jaws with 5.08 cm (2") gap pulled at 2.54 cm/min (1"/min) until breakage. Max load at break was deemed the samples tensile strength. Dry tensiles were conditioned at least 24 hr at 50% relative humidity and 25°C prior to testing. Wet tensiles are subjected to standard 82°C (180°F), 10 minute hot water conditioning soak prior to testing. A control binder, having industry acceptable mat properties, was evaluated at the same time as the binder compositions of the invention. Typical dry tensile results range 22.67-45.35 g (50-100 lbs) per sample, and most likely 27.21-36.28 g (60-80 lbs) for 3.81 x 10.16 cm (1.5" x 4") test strips. Wet tensiles are most often 13.60-27.21 g (30-60 lbs) and usually 15.87-24.94 g (35-55 lbs) for same size samples.

Tears were analyzed via Elmendorf swing pendulum method, utilizing 3600 g pendulum and 6.35 x 6.35 cm (2.5" x 2.5") sample size. Samples were pre-cut in the Elmendorf apparatus and tested via standard methods as noted in TAPPI (Technical Association of Pulp and Paper Industry) test methods. Samples were tested in 3-ply to reduce affects of dispersion and reported as grams tear/individual sheet.

Tensile retentions were used to verify the cure speed of the binder, via comparison of wet tensile strengths and retentions at the lowest cure temperatures, with control binders. Tear retentions were calculated as % wet/dry tensile "retained." Acceptable retentions are 50-98%, more likely 60-90% and most preferably 65-85% tensile retained.

Mat caliper was measured, via a stack of 21 tensile strips, and recorded in mils of thickness per individual sheet.

Resin stabilities were verified using two methods: 1) by visual analysis of neat resin as it ages 'on shelf' and 2) by timed, water dilution stability testing. Visual analysis of heat resin is to determine fitness for use based on viscosity growth and binder separation potential over time. Dilution stability, reflects standard wet-laid glass mat manufacturing processes, and is tested by daily dilutions of neat resin with water:resin ratios of 20:1, 10:1, 5:1 and 2:1. Dilutions were homogenized and allowed to sit at room temp for 3 hr. Formation of precipitate within or at the end of 3 hr was deemed dilution failure. Neat resin was re-diluted daily. The day of neat resin age, upon which the 10:1 dilution fails at 3 hr or less, was typically deemed the shelf life of the resin.

Binder Foaming was determined by diluting the binder composition to 25% solids at 25°C with water. 150 ml were measured into an industrial Waring blender, cover and mix on high for 30 seconds. After carefully pouring the blended mixture into a 250 ml graduated cylinder, total foam+liquid height was recorded after 1, 5 and 10 minutes.

### Example 1

In Example 1, polyacrylic acid and latex modified UF resins on wet-laid fiberglass handsheets were prepared and evaluated. The results of Example 1 appear in Table 1.

Example 1 illustrates that latex when added to a poly acrylic acid modified resin, as done in Resin C, supplements a resins -12.2-82°C (10-180°F) wet and dry tensile development such that tensile properties are additive, and it can be used more efficiently than latex or poly acrylic acid modification alone.

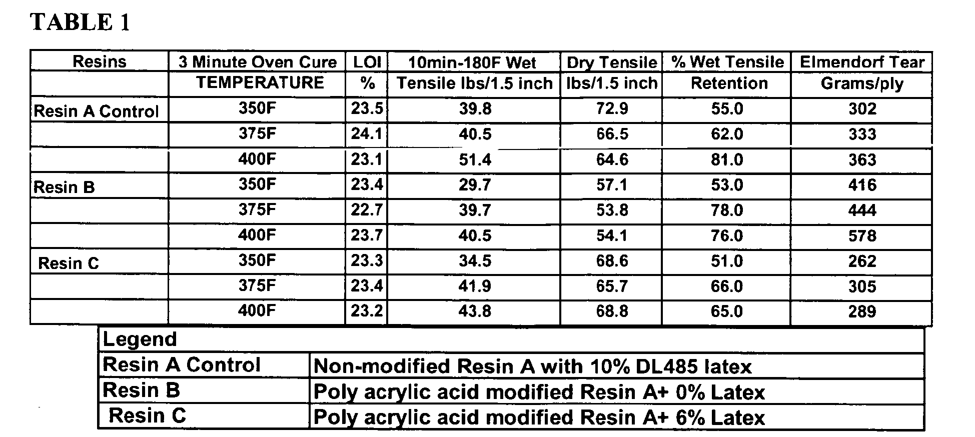

### Conversion of physical values in TABLE 1:

82°C (180°F), 177°C (350°F), 191°C (375°F), 204°C (400°F)
453.592 g/3.81 cm (lbs/1.5 inch)

### Example 2

In Example 2, glass mat hand sheets were prepared with glass fibers a standard ammonia modified UF resin with varying amounts of modifiers. Two variations of binder compositions of the present invention were compared to a standard industry control binder having properties required by the glass mat industry. The UF resins were prepared following the standard procedures of methylolation and condensation of urea and formaldehyde. In binders 1 and 2, the latex emulsion and water-soluble polymer were added at the end of the UF resin synthesis and would be supplied to end user as a one-piece system. All binders were homogenous and stable for at least one week one the shelf as determined by sufficient water dilution after one week's age.

Mats were prepared using a polyacrylamide whitewater and a fixed amount of glass fibers (Owens-Corning Advantex 9501 glass fibers). Following formation, the mat was saturated with the respective binder formulation and excess binder was removed by vacuum. The binder-treated mats were then cured for 3 minutes at 191°C (375°F) and 204°C (400°F) in a high airflow Mathis oven. Following the cure process, strength and other composite mat properties were measured. Dry tensile strength and hot-wet tensile strength (by soaking the handsheets in 82°C (180°F) water for 10 minutes) were measured on a Instron tensile tester. Elmendorf tear strength was measured using a Thwing-Albert Pro Tear tester. The results of example 2 are shown in Tables 2.1 and 2.2.

Example 2 illustrates the ability to achieve at least equivalent dry and wet tensile and cure speed, as depicted by wet tensile development, when emulsion concentrations are lowered, supplemented with water-soluble polymer, and used in combination with each other in a modified UF thermosetting resin. Such practice will provide a more stable one-piece system while most often lowering total raw material costs and allow improved mat processing ability using the invented binder systems.

**TABLE 2.1**

| | | **Modification on Weight Basis** | | **Supplied Binder Properties** | |
|---|---|---|---|---|---|
| **Binder** | **UF** | **Latex Emulsion Polymer** | **Water-Soluble Polymer** | **Viscosity** | **%Solids** |
| **Control Binder** | 88.0% | 120% | 0.0% | 200 | 63% |
| **Invention 1** | 96.0% | 20% | 20% | 300 | 57% |
| **Invention 2** | 92.9% | 5.7% | 1.4% | 300 | 61% |

**TABLE 2.2**

| **Binder** | **# Dry Tensile** | | **# Wet Tensile** | |
|---|---|---|---|---|
| | **375F** | **400F** | **375F** | **400F** |
| **Control** | 69.8 | 69 | 41.8 | 42.7 |
| **Inv 1** | 76.2 | 70 | 46.3 | 46.3 |
| **Inv 2** | 72.9 | 72.1 | 49.5 | 47.1 |

| | | | | |
|---|---|---|---|---|
| **Basis Weight** = 1.75#/100 sq.ft. **LOI%** = 21% Binder Content | | | | |

### Conversion of physical values in TABLE 2.2:

191°C (375°F), 204°C (400°F)
1.75#/100 x 0.09291 m² (1.75#/100 sq.ft.)

### Example 3

Example 3 compares binder compositions of the present invention to prior art binders modified only with a latex emulsion polymer. The results of example 3 are shown in Tables 3.1 and 3.2.

Example 3 illustrates that the binder compositions of the invention are more economically utilized, when compared to prior art binders, by supplementing the typically more costly latex emulsion with a typically lest costly water-soluble polymer. As shown in Tables 3.1 and 3.2, the properties of the mats derived utilizing binder compositions of the present invention meet or exceed the properties attained via prior known modification arts in dry tensile, wet tensile, caliper and tear properties.

**TABLE 3.1**

| | | **Modification on Weight Basis** | | **Supplied Binder Properties** | |
|---|---|---|---|---|---|
| **Binder** | **UF** | **Latex Emulsion Polymer** | **Water-Soluble Polymer** | **Viscosity** | **% Solids** |
| | | | | | |
| **Control Binder** | 88.0% | 12.0% | 0.0% | 200 | 63% |
| **Invention A** | 90.5% | 8.0% | 1.5% | 300 | 61% |

**TABLE 3.2**

| **Binder** | **# Dry Tensile** | | **# Wet Tensile** | | **Caliper** | | **Tear** | |
|---|---|---|---|---|---|---|---|---|
| | **375F** | **400F** | **375F** | **400F** | **375F** | **400F** | **375F** | **400F** |
| **Control** | 84.1 | 86.7 | 59.3 | 59.7 | 34.0 | 34.1 | 317 | 375 |
| **Inv A** | 95.3 | 92.2 | 62.9 | 60.6 | 33.8 | 33.5 | 349 | 418 |

| | | | | | | | | |
|---|---|---|---|---|---|---|---|---|
| **Basis Weight** = 1.80#/100 sq.ft. **LOI%** = 23% Binder Content | | | | | | | | |

### Conversion of physical values in TABLE 3.2:

191°C (375°F), 204°C (400°F)
1.80#/100 x 0.09291 m² (1.80#/100 sq.ft.)

### Example 4

Example 4 illustrates that either an acrylic or a SBR latex emulsion can be utilized in the binder compositions of the invention to achieve at least equivalent, and often superior mat properties, when compared to the standard industry control. The results of example 4 are shown in Tables 4.1 and 4.2. The binder compositions of the invention also improved resin shelf life in addition to lowering raw material costs.

**TABLE 4.1**

| | | **Modification on Weight Basis** | | **Supplied Binder Properties** | |
|---|---|---|---|---|---|
| **Binder** | **UF** | **Latex Emulsion Polymer** | **Water-Soluble Polymer** | **Viscosity** | **% Solids** |
| | | | | | |
| **Control Binder** | 88.0% | 12.0% | 0.0% | 200 | 63% |
| **Invention I-Acrylic** | 92.0% | 6.5% | 1.5% | 300 | 60% |
| **Invention II-SBR** | 92.0% | 6.5% | 1.5% | 300 | 60% |

**TABLE 4.2**

| **Binder** | **# Dry Tensile** | | **# Wet Tensile** | | **Caliper** | | **Tear** | |
|---|---|---|---|---|---|---|---|---|
| | **375F** | **400F** | **375F** | **400F** | **375F** | **400F** | **375F** | **400F** |
| | | | | | | | | |
| **Control** | 73.8 | 66.6 | 51.5 | 50.0 | 33.3 | 33.0 | 269 | 308 |
| **Inv I-Acrylic** | 67.9 | 68.5 | 51.1 | 59.7 | 32.7 | 32.3 | 359 | 363 |
| **Inv II-SBR** | 71.4 | 68.1 | 53.2 | 50.2 | 32.6 | 32.8 | 349 | 334 |
| | | | | | | | | |
| **Basis Weight** = 1.75#/100 sq.ft. | | | | | | | | |
| **LOI%** = 21% Binder Content | | | | | | | | |

### Conversion of physical values in TABLE 4.2:

191°C (375°F), 204°C (400°F)
1.75#/100 x 0.09291 m² (1.75#/100 sq.ft.)

### Example 5

Example 5 compares the foaming tendency of a "high tear binder" composition prepared in accordance with US 6,384,116 to that of a binder composition of the present invention. The results of Example 5 are shown in Table 5.

**TABLE 5**

| | **Composition** | | | **Foam Level (ml; Waring Blender Test)** | | |
|---|---|---|---|---|---|---|
| **RESIN** | **UF** | **Latex Emulsion** | **Water-Soluble** | **1 MIN** | **5 MIN** | **10 MIN** |
| **High Tear C802B** | 89 | 10 | 1.0 | 216 | 214 | 212 |
| **Invention 3** | 92.1 | 6.5 | 1.4 | 190 | 180 | 167 |

| | | | | | | |
|---|---|---|---|---|---|---|
| *note levels and type of defoamer used in both compositions are the same | | | | | | |

## Claims

1. An aqueous modified urea-formaldehyde binder composition comprising, a urea-formaldehyde resin modified with a combination of:
a) about 0.1 to about 5.0 wt%, based upon the weight of the modified urea-formaldehyde resin, of a water-soluble polymer, and
b) about 0.1 to about 25 wt%, based upon the weight of the modified urea-formaldehyde resin, of a latex emulsion,
provided however, the UF resin is not modified with an water soluble non-ionic amine oxide.

2. The aqueous modified urea-formaldehyde binder composition of claim 1 wherein the urea-formaldehyde resin is modified with a combination of:
a) about 0.2 to about 3.0 wt%, based upon the weight of the modified urea-formaldehyde resin, of a water-soluble polymer, and
b) about 2.0 to about 20 wt%, based upon the weight of the modified urea-formaldehyde resin, of a latex emulsion.

3. The aqueous modified urea-formaldehyde binder composition of claim 1 wherein the urea-formaldehyde resin is modified with a combination of:
a) about 1.0 to about 2.0 wt%, based upon the weight of the modified urea-formaldehyde resin, of a water-soluble polymer, and
b) about 2.0 to about 7.0 wt%, based upon the weight of the modified urea-formaldehyde resin, of a latex emulsion.

4. The aqueous modified urea-formaldehyde binder composition of claim 1 wherein the combination of the water-soluble acrylic polymer and latex emulsion is present in an amount less than or equal to about 25 wt%, based upon the weight of the modified urea-formaldehyde resin.

5. The aqueous modified urea-formaldehyde binder composition of claim 1 wherein the binder has a solids content, as measured by a pan solids method, of about 55% to about 65% and a the viscosity, of about 100 to about 600 cps.

6. The aqueous modified urea-formaldehyde binder composition of claim 1 wherein the water-soluble polymer has a viscosity of between about 100 to about 1000 cps at an 11% to 40% solids content.

7. The aqueous modified urea-formaldehyde binder composition of claim 1 wherein the water-soluble polymer comprises about 40 to about 100 wt%, based on the weight of the water-soluble polymer, at least one ethylenically unsaturated carboxylic acid monomer selected from the group consisting of acrylic acid, methacrylic acid, crotonic acid, fumaric acid, maleic acid, 2-methyl maleic acid, itaconic acid, acrylic acid, methylene glutaric acid, their salts, and combinations thereof.

8. The aqueous modified urea-formaldehyde binder composition of claim 1 wherein the water soluble polymer comprises about 40 to about 100wt%, based on the weight of the water-soluble acrylic polymer, at least one ethylenically unsaturated anhydride, which form carboxylic acids during or subsequent to polymeriziations, selected from the group consisting of maleic anhydride, itaconic anhydride, acrylic anhydride, methacrylic anhydride, and combinations thereof.

9. The aqueous modified urea-formaldehyde binder composition of claim 1 wherein the water-soluble polymer comprises a neutralized polyacrylate polymer.

10. The aqueous modified urea-formaldehyde binder composition of claim 1 wherein the water-soluble polymer comprises a styrene-maleic anhydride copolymer.

11. The aqueous modified urea-formaldehyde binder composition of claim 1 wherein the water-soluble polymer comprises a random polymer of about 20 wt% to about 40 wt% of acrylic acid with about 60 wt % to about 80 wt% acrylamide.

12. The urea-formaldehyde composition of claim 1 wherein the latex emulsion comprises an anionic acrylic or vinyl acrylic latex.

13. The urca-formaldehyde composition of claim 1 wherein the latex emulsion comprises an acrylic latex based upon polymers or copolymers produced from monomers comprising ethylenically unsaturated carboxylic acid monomers or esters thereof.

14. The urea-formaldehyde composition of claim 1 wherein the latex emulsion comprises a styrene acrylic latex or a styrene-butadiene latex copolymer.

15. The aqueous modified urea-formaldehyde binder composition of claim 1 wherein the latex emulsion comprises at least one ethylenically unsaturated monomer selected from the group consisting of acrylic acid, methacrylic acid, methylacrylate, methylmethacrylate, methylol-acrylamide, and combinations thereof.

16. A method of making the modified urea-formaldehyde composition of claim 1 comprising:
a) combining a urea-formaldehyde resin with an ammonia neutralized polyacrylate polymer to form a first reaction mixture,
b) neutralizing the first reaction mixture with a base to form a neutralized reaction mixture having a pH of between about 7 and about 8.5.
c) combining the neutralized reaction mixture with a latex emulsion.

17. The method of claim 16 wherein the ammonia neutralized polyacrylate polymer is utilized in an amount of about 1.0 to about 2.0 wt%, based upon the weight of the modified urea-formaldehyde resin, and the latex emulsion is utilized in an amount of about 2.0 to about 7.0 wt%, based upon the weight of the modified urea-formaldehyde resin.

18. A bonded fiber mat comprising a fiber mat and the modified urea-formaldehyde binder composition of claim 1.

19. The bonded fiber mat of claim 18 wherein the fiber mat contains fibers selected from the group consisting of carbon, cellulose, polyester, glass, cotton and combinations thereof.

20. The bonded fiber mat of claim 18 wherein the modified urea-formaldehyde binder composition is present in an amount of between about 10 to about 40 wt% based on the dry weight of the bonded fiber mat.
